# EUROPÄISCHE PATENTSCHRIFT

(11) **EP 3 868 519 B1**
(45) Veröffentlichungstag und Bekanntmachung des Hinweises auf die Patenterteilung: **07.02.2024**
(21) Anmeldenummer: 20216087.5
(22) Anmeldetag: 21.12.2020
(51) Int. Cl.: B25J 9/00, B25J 17/02, B25J 5/00

(54) **MOBILER KOMMISSIONIERROBOTER UND VERFAHREN ZU SEINEM BETRIEB**
MOBILE PICKING ROBOT AND METHOD FOR ITS OPERATION
ROBOT MOBILE DE PRÉPARATION DE COMMANDES ET SON PROCÉDÉ DE FONCTIONNEMENT

(30) Priorität: 29.01.2020 DE 102020102121
(43) Veröffentlichungstag der Anmeldung: 25.08.2021
(73) Patentinhaber: Linde Material Handling GmbH, 63743 Aschaffenburg (DE)
(72) Erfinder: KRUMBHOLZ, Peter, 63869 Jakobsthal (DE); GROH, Jonas, 63743 Aschaffenburg (DE); HILDEBRANDT, Michael, 63785 Obernburg (DE)
(74) Vertreter: Patentship Patentanwaltgesellschaft

(56) Entgegenhaltungen:
- EP-A1- 3 296 070
- EP-A2- 2 679 354
- DE-A1-102017 130 577
- IT-A1- PR20 100 034
- JP-A- H10 180 675
- JP-A- 2004 066 364
- JP-A- 2008 214 054
- JP-A- 2010 005 713
- JP-A- 2017 052 052
- US-A1- 2017 107 058

## Beschreibung

Die Erfindung betrifft einen mobilen Kommissionierroboter zur automatischen Kommissionierung von Objekten mit einem Lasthandhabungsmanipulator, der einen Roboterarm und ein mit dem Roboterarm in Verbindung stehendes Aufnahmewerkzeug zur Aufnahme der Objekte umfasst, wobei zwischen dem Roboterarm und dem Aufnahmewerkzeug ein Ausgleichselement vorgesehen ist, das Relativbewegungen zwischen dem Roboterarm auf der einen Seite und dem Aufnahmewerkzeug auf der anderen Seite ermöglicht, wobei das Ausgleichselement aus mindestens drei Sektionen aufgebaut ist, die ein Feststellelement, ein xy-Element und ein z-Element umfassen, wobei das xy-Element Relativbewegungen in einer xy-Ebene ermöglicht und das z-Element Relativbewegungen in z-Richtung senkrecht zur xy-Ebene ermöglicht und das Feststellelement eine Arretierung des xy-Elements ermöglicht, wobei das Feststellelement, das xy-Element und das z-Element über eine gemeinsame Welle miteinander verbunden sind, wobei das xy-Element ein Gehäuse und einen im Gehäuse schwimmend gelagerten Teller umfasst.

Die Erfindung betrifft weiterhin ein Verfahren zum Betreiben eines derartigen Kommissionierroboters.

Unter Kommissionierung versteht man alle Methoden zur Zusammenstellung von bestimmten Objekten, insbesondere von Gütern in Warenlagern oder Warenverteilzentren, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom betriebenen Transportfahrzeugen von einer Quellposition, z.B. einer Quellpalette, aufgenommen und auf einer auf dem Transportfahrzeug transportierten Zielpalette abgesetzt. Insbesondere werden hierzu mobile Kommissionierroboter verwendet, die die Packstücke selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein.

Mobile Kommissionierroboter weisen einen Lasthandhabungsmanipulator auf, der meist einen Hubmast oder eine andere Hubeinrichtung zur vertikalen Positionierung des Greifers im Regal und auf der Zielpalette umfasst. Dabei werden für den vollautonomen, mobilen Kommissionierprozess häufig Sonderkinematiken des Roboterarms eingesetzt. Roboter mit Standardkinematiken, insbesondere 6-Achs-Industrieroboter, sind oftmals zu schwer, nicht für den mobilen Einsatz konzipiert und haben kinematische Einschränkungen, die einen Einsatz in diesem Gebiet erschweren. Vorteilhafter sind Roboterarme mit flachen Kinematiken, die an einem Hubmast vertikal verfahren werden können. Derartige Roboterarme weisen mehrere flach, d.h. horizontal, angeordnete Armelemente auf, die einen zylindrischen Greifraum aufspannen, der sich für das Arbeiten in engen Lagerhäusern bestens eignet.

Mobile Kommissionierroboter mit flachen Armkinematiken sind beispielsweise aus der DE 10 2017 129 468 A1 und der DE 10 2017 130 577 A1 bekannt.

Bei der automatischen Kommissionierung von Packstücken auf Paletten durch mobile Kommissionierroboter oder andere Handhabungsgeräte wird die Zielposition der Packstücke auf der Zielpalette nach derzeitigem Stand der Technik auf Basis von Sensordaten ermittelt. Dazu wird die Zielpalette und das darauf befindliche Packmuster aufgenommen. Hierzu wird in der Regel eine berührungslos arbeitende 3D-Sensorik, beispielsweise in Form von ToF (Time of Flight)- oder Stereo- Kameras, verwendet. Aus den Sensordaten wird ein passender Ablageplatz für das nächste Packstück errechnet beziehungsweise ein vorab berechneter Ablageplatz validiert. Selbst bei bekanntem Packmuster auf der Zielpalette - wovon bei rein robotisch gepackten Paletten ausgegangen werden kann - ist eine Validierung der Ablageposition notwendig, da diverse Faktoren zu Abweichungen führen können.

Hierzu gehören insbesondere folgende Faktoren:
- Toleranzen in den Maßen der Packstücke;
- Falsche Angaben zu den Maßen der Packstücke aus den Stammdaten aufgrund mangelnder Datenqualität;
- Setzung des Packmusters, insbesondere bei höher gestapelten, aus mehreren Lagen bestehenden, Paletten und bei schweren Packstücken, weiter verstärkt durch das Verfahren der Zielpalette;
- Toleranzen in der Ablageposition der bereits abgelegten Packstücke in x-Richtung (horizontaler Längsrichtung), y-Richtung (horizontale Querrichtung) und Ψ (Drehung um vertikale Achse) durch toleranzbehaftetes Ablegen oder durch nachträgliches Verrücken, zum Beispiel durch dynamische Einflüsse beim Verfahren der Zielpalette;
- Störende Elemente auf der Zielpalette, zum Beispiel Reste von Klebeband oder Folie.

Die Vermessung der Ablageposition eines Packstückes auf der Zielpalette ist toleranzbehaftet. Die Ablage des Packstücks auf der errechneten Position muss dementsprechend mit Sicherheitsabständen erfolgen, um Kollisionen mit bereits abgelegten Packstücken zu verhindern. Solche Kollisionen können zum Herunterfallen von Packstücken aus der Zielpalette führen, was zu Qualitäts-, Verfügbarkeits- und Sicherheitsproblemen führen kann.

Zusätzlich zu den toleranzbehafteten Sollpositionen entstehen auch beim Ablegen des Packstückes auf der Zielpalette selbst Toleranzen. Beide Fehler addieren sich und führen zu größeren Sicherheitsabständen zwischen den Packstücken.

Sicherheitsabstände beim Ablegen der Packstücke auf der Zielpalette führen zu Spalten zwischen den Packstücken und damit zu einem schlechteren Packmuster auf der Zielpalette. Das Packmuster der Zielpalette wird weniger dicht, wodurch die Palette höher beladen wird, oder nicht alle Packstücke bis zur maximalen Höhe auf die Palette passen. Zusätzlich wird das Packmuster aufgrund der Spalte weniger stabil, wodurch weniger hoch gestapelt werden kann oder ein erhöhter Aufwand für die Stabilisierung, beispielsweise durch die Verwendung von Stretchfolien und Zwischenlagen, erforderlich ist.

Aus der JP H10 180675 A ist ein gattungsgemäßer Kommissionierroboter mit den Merkmalen des Oberbegriffs des Patentanspruchs 1 bekannt.

Die IT PR20 100 034 A1 offenbart eine Vorrichtung zum Anheben eines Körpers von einer Palette.

Die JP 2008 214054 A offenbart eine Palletiervorrichtung.

Die JP 2010 005713 A offenbart ein Aufnahmewerkzeug eines Palletierroboters.

Aus der EP 2 679 354 A2 ist eine Vorrichtung zur automatischen Handhabung von Werkstücken bekannt.

Die DE 10 2017 130 577 A1 offenbart einen mobilen Kommissionierroboter mit gekoppelten Armgelenksdrehachsen des Roboterarms.

Aus der US 2017/107058 A1 ist ein Übergabeapparat bekannt.

Die EP 3 296 070 A1 offenbart einen Greifer für einen Roboter.

Aus der JP 2017 052052 A ist eine Lasthandhabungsvorrichtung bekannt.

Die JP 2004 066364 A offenbart einen Verbindungsmechanismus zum Verbinden einer Hand, die zum Auf- oder Abbauen eines Produkts verwendet wird, an einen Roboterarm.

Der vorliegenden Erfindung liegt die Aufgabe zugrunde, einen mobilen Kommissionierroboter der eingangs genannten Art sowie ein Verfahren zu seinem Betrieb so auszugestalten, dass eine zielgenaue Positionierung der Objekte auch bei toleranzbehafteten Zielpositionen ermöglicht wird.

Diese Aufgabe wird beim Kommissionierroboter erfindungsgemäß dadurch gelöst, dass das Ausgleichselement über das xy-Element mit dem Roboterarm und über das z-Element mit dem Aufnahmewerkzeug verbunden ist, wobei das Gehäuse des xy-Elements am Roboterarm befestigt ist und der Teller starr an der Welle befestigt ist, und wobei das Feststellelement eine Scheibe und eine Spannvorrichtung umfasst, wobei die Scheibe verdrehsteif an der Welle befestigt ist und die Spannvorrichtung mindestens zwei axial zueinander bewegliche Klemmelemente aufweist, zwischen denen die Scheibe einklemmbar ist, und das z-Element einen an der Welle befestigten Träger umfasst, an dem über mindestens ein Elastizitätselement das Aufnahmewerkzeug befestigt ist.

Mit dem Ausgleichselement wird eine Nachgiebigkeit des Aufnahmewerkzeugs für mehrere Freiheitsgrade erreicht. Dadurch können Toleranzen bei den Zielpositionen ausgeglichen werden. Dabei ist das Ausgleichselement vorzugsweise für eine Nachgiebigkeit in mindestens drei Freiheitsgraden ausgelegt, nämlich in x-Richtung, die die horizontale Längsrichtung ist, in y-Richtung, die die horizontale Querrichtung ist, in z-Richtung, die die vertikale Richtung ist. Zusätzlich kann das Ausgleichselement auch für einen vierten Freiheitsgrad, nämlich der Drehung Ψ um die vertikale z-Richtung ausgelegt sein.

Hierzu ist das Ausgleichselement aus mindestens drei Sektionen aufgebaut, die ein Feststellelement, ein xy-Element und ein z-Element umfassen, wobei das xy-Element Relativbewegungen in einer xy-Ebene ermöglicht und das z-Element Relativbewegungen in z-Richtung senkrecht zur xy-Ebene ermöglicht und das Feststellelement eine Arretierung des xy-Elements ermöglicht.

Dabei ist gemäß der Erfindung vorgesehen, dass das Ausgleichselement über das xy-Element mit dem Roboterarm und über das z-Element mit dem Aufnahmewerkzeug verbunden ist. Weiterhin sind das Feststellelement, das xy-Element und das z-Element über eine gemeinsame Welle miteinander verbunden. Dabei umfasst das xy-Element ein am Roboterarm befestigtes Gehäuse und einen im Gehäuse schwimmend gelagerten Teller. Der Teller ist starr an der Welle befestigt. Ferner umfasst das Feststellelement eine Scheibe und eine Spannvorrichtung, wobei die Scheibe verdrehsteif an der Welle befestigt ist und die Spannvorrichtung mindestens zwei axial zueinander bewegliche Klemmelemente aufweist, zwischen denen die Scheibe einklemmbar ist. Das z-Element umfasst einen an der Welle befestigten Träger, an dem über mindestens ein Elastizitätselement das Aufnahmewerkzeug befestigt ist.

Gemäß einer Weiterbildung der Erfindung ermöglicht die schwimmende Lagerung des Tellers des xy-Elements neben Bewegungen in x-Richtung und y-Richtung, d.h. in der xy-Ebene, auch Drehbewegungen um die z-Achse.

Um die Reibungskräfte möglichst klein zu halten, ist dabei eine rollende Bewegung des Tellers in dem Gehäuse des xy-Elements anzustreben. Daher umfasst die schwimmende Lagerung des Tellers des xy-Elements vorzugsweise eine Kugelrollenlagerung. Die Kugelrollen erlauben eine reibungsarme und allseitige Bewegung des Tellers im Gehäuse.

Außerdem ist bevorzugt zwischen dem Gehäuse und dem Teller des xy-Elements mindestens ein Rückstellelement vorgesehen, das eine Rückstellung des Tellers in eine, insbesondere zentrierte, Ausgangslage ermöglicht.

Dabei umfasst das Rückstellelement zweckmäßigerweise mindestens ein Federelement, insbesondere eine Druckfeder oder Zugfeder, und/oder mindestens ein elastisches Bandelement und/oder mindestens einen hydraulischen oder pneumatischen Druckzylinder und/oder mindestens ein Magnetlager.

Es kann sich hierbei beispielsweise um Zugfedern handeln, die in radialer und/oder tangentialer Richtung am Teller angebracht sind. Auch elastische, bandförmige Federelemente, die den Teller umschlingen, können zum Einsatz kommen. Beispielsweise können vier elastische Bänder in vier Richtungen gespannt sein. Durch Befestigung der Bänder am Teller entstehen auch bei Verdrehung und somit Drehung Ψ um die vertikale z-Richtung rückstellende Kräfte.

Über Steifigkeit, Anordnung, beispielsweise radial, tangential oder Mischformen, und Anzahl der Rückstellelemente können die rückstellenden Kräfte eingestellt werden. Dabei müssen die Rückstellkräfte und Rückstellmomente zum bewegten Packstück passen. Beispielsweise entstehen bei leichten Packstücken, oder solchen, die leicht umfallen, eher kleine Reaktionskräfte in Folge einer Kollision.

Das Rückstellelement ist vorzugsweise so ausgelegt, dass sowohl laterale als auch winklige Verschiebungen zurückgestellt werden.

Bevorzugt weist das Rückstellelement eine Einstelleinrichtung zur Einstellung einer Rückstellkraft auf. Von Vorteil ist in diesem Zusammenhang der Einsatz eines Magnetlagers als Rückstellelement, da hier die Federsteifigkeit und somit die Rückstellkraft durch eine elektronische Steuerung aktiv an verschiedene Lasten angepasst werden kann. Auch hydraulischen oder pneumatischen Druckzylindern, die mit einem Druckspeicher in Verbindung stehen, der bevorzugt im Einstelldruck einstellbar ist, können die Federsteifigkeit und somit die Rückstellkräfte auf einfache Weise eingestellt werden. Es müssen lediglich die hydraulischen beziehungsweise pneumatischen Druckverhältnisse angepasst werden.

Um Schwingungen im System zu verhindern, ist insbesondere bei schnellen Bewegungen oder großen Beschleunigungen eine Arretierung des Ausgleichselements sinnvoll. Hierfür ist das Feststellelement mit Scheibe und Spannvorrichtung vorgesehen. Zwischen den axial zueinander beweglichen Klemmelementen der Spannvorrichtung ist die Scheibe einklemmbar. Die Klemmelemente sind zweckmäßigerweise mit einem Lüftungs-Element und einem Brems-Element verbunden, wobei die Klemmelemente mittels des Lüftungs-Elementes von der Scheibe des Feststellelements abhebbar und somit lüftbar sind und mittels des Brems-Elementes zueinander bewegbar sind. Mit dem Brems-Element wird somit das Feststellelement in eine Bremsstellung bzw. Arretierstellung beaufschlagt und mit dem Lüftungs-Element das Feststellelement in eine Lösestellung bzw. Lüftstellung beaufschlagt. Das Feststellelement dient dazu, in der Bremsstellung die in dem xy-Element eingestellte Position des Tellers zu arretieren und in der Lösestellung die Relativbewegungen des Tellers in dem xy-Element zuzulassen.

Dabei kann das Lüftungs-Element insbesondere als Lüftungs-Magnet und das Brems-Element als Brems-Feder ausgebildet sein. Falls Ausgleichsbewegungen des Ausgleichselements zugelassen werden sollen, werden die Klemmelemente mittels des, insbesondere als Elektromagnet ausgebildeten, Lüftungs-Magnet auseinandergezogen. Zur Arretierung des Ausgleichselements werden die Klemmelemente mittels der bevorzugt von Druckfedern gebildeten Brems-Feder zueinander bewegt, so dass die Scheibe wie bei einer Scheibenbremse zwischen den Klemmelementen eingeklemmt und somit festgestellt wird.

Vorzugsweise ist die Scheibe des Feststellelements verdrehsteif, aber axial verschieblich auf der Welle befestigt und kann so in einfacher Weise in der Lösestellung einen Spalt zu den Klemmelementen der Spannvorrichtung aufmachen.

Zweckmäßigerweise sind die beiden Klemmelemente der Spannvorrichtung des Feststellelements mittels Schrauben miteinander verschraubt, wobei die Scheibe um die Schrauben Aussparungen aufweist, die die Relativbewegungen der Scheibe ermöglichen. Aufgrund der Aussparungen sind auch überlagerte Bewegungen in x- und y-Richtung sowie Drehungen der Scheibe mit dem Drehwinkel Ψ um die z-Achse möglich.

Um auch Ausgleichsbewegungen in z-Richtung zu ermöglichen, ist das z-Element vorgesehen. Da das Aufnahmewerkzeug über das Elastizitätselement am Träger des z-Elements befestigt ist, ist eine Nachgiebigkeit in z-Richtung gegeben. Dabei ist das Elastizitätselement zweckmäßigerweise als Federstößel ausgebildet. Mit Vorteil sind vier Federstößel in vier Ecken des Trägers vorgesehen, so dass auch Unebenheiten beim Ablegen von Packstücken ausgeglichen werden können.

In einer vorteilhaften Ausgestaltung der Erfindung ist eine sensorische Überwachung der Ausgleichsbewegungen vorgesehen. Hierzu weist das Ausgleichselement mindestens einen Sensor auf, der die Relativbewegungen misst.

Gemäß einer bevorzugten Ausführungsform ist der Sensor im Bereich der Scheibe des Feststellelements angeordnet und zur Messung der Bewegungen der Scheibe in x- und y-Richtung ausgebildet. Hierzu kann die Scheibe an mindestens zwei orthogonal angeordneten Stellen abgekantet sein. Die Abkantungen bilden Messflächen, die vom Sensor abtastbar sind.

Alternativ oder zusätzlich kann der Sensor im Gehäuse des xy-Elements angeordnet und zur Messung der Bewegungen des Tellers im Gehäuse ausgebildet sein.

Eine weitere Möglichkeit besteht darin, dass der Sensor im Bereich des Elastizitätselements des z-Elements angeordnet und zur Messung der Bewegungen des Elastizitätselements in z-Richtung ausgebildet ist. Hierfür können insbesondere die Verfahrwege der Federstößel sensorisch abgetastet werden.

Insgesamt kann die sensorische Überwachung der Ausgleichsbewegungen durch berührungslose oder berührende Wegmessung erfolgen. Für eine berührungslose Wegmessung ist der Sensor vorteilhafterweise als berührungsloser Wegmesssensor ausgebildet. Der Sensor kann hierzu beispielweise als optischer Sensor, insbesondere als Kamera oder Lasersensor, ausgebildet sein. Aufgrund der begrenzten Ausgleichsbewegungen kann der Sensor aber auch als Berührungssensor ausgebildet sein. Ebenso ist eine Ausbildung als Kraftsensor möglich. Kraftsensoren können insbesondere zur Federkraftmessung entlang der Federelemente angeordnet sein.

In einer besonders bevorzugten Ausgestaltung der Erfindung verfügt der Kommissionierroboter über eine flache Armkinematik nach dem so genannten Scara-Prinzip. Hierzu weist der Lasthandhabungsmanipulator einen vertikal ausgerichteten Hubmast und einen daran höhenbeweglich angebrachten, horizontal ausgerichteten Roboterarm mit mehreren vom Hubmast ausgehend aneinander gereihten Armelementen mit aufsteigender Nummerierung auf. Die Armelemente verfügen über Armgelenke mit vertikalen Armgelenksdrehachsen. An dem letzten, am äußeren Reihenende angeordnete Armelement ist das Ausgleichselement angeordnet, an dem das Aufnahmewerkzeug befestigt.

Die Erfindung betrifft ferner ein Verfahren zum Betreiben des mobilen Kommissionierroboters.

Verfahrensseitig wird die gestellte Aufgabe dadurch gelöst, dass der Kommissionierroboter zwischen einem Quellladungsträger, von dem das Objekt aufgenommen wird, und einem Zielladungsträger, auf dem das Objekt abgelegt wird, gefahren wird, und beim Aufnehmen und/oder Ablegen des Objekts die Relativbewegungen des Ausgleichselements von einer Datenverarbeitungseinrichtung freigegeben werden. Als Quellladungsträger dient insbesondere eine Quell-Palette, während als Zielladungsträger insbesondere eine Zielpalette dient.

Besonders vorteilhaft wirkt sich die Erfindung vor allem beim Ablagevorgang eines Objekts auf dem Zielladungsträger aus. Durch Verwendung des Ausgleichselements kann der Ablageprozess des Objekts mit Vorteil folgendermaßen umgestaltet werden:
Der Kommissionierroboter wird mit dem aufgenommenen Objekt zum Zielladungsträger gefahren. Der Zielladungsträger wird mittels einer Umfeldsensorik erfasst. Die Sensordaten der Umfeldsensorik werden in der Datenverarbeitungseinrichtung ausgewertet, wobei eine vorgesehene Ablageposition für das Objekt auf dem Zielladungsträger in den vier Freiheitsgraden x-Richtung (horizontale Längsrichtung), y-Richtung (horizontale Querrichtung), z-Richtung (vertikale Richtung) und Ψ (Drehung um die z-Richtung) verifiziert wird. Anschließend wird der Lasthandhabungsmanipulator mit Sicherheitsabständen in x-, y-, und z-Richtung an die Ablageposition herangefahren. Entstandene Spalte in x-, y- und Ψ-Richtung werden mittels des Ausgleichselements zugefahren. Durch Zufahren des Spaltes in z-Richtung wird schließlich das Objekt abgelegt.

Zweckmäßigerweise wird das Ausgleichselement beim Fahren des Kommissionierroboters arretiert und erst beim Heranfahren des Lasthandhabungsmanipulators zur Aufnahme- oder Ablageposition freigegeben. Bevorzugt ist das Ausgleichselement durch das in die Arretierstellung angesteuerte Feststellelement über weite Teile des Greifprozesses eines Objekt arretiert und erst in unmittelbarer Nähe zum Ablageort auf der Zielpalette wird das Feststellelement in die Lösestellung betätigt, um eine Bewegung im xy-Element freizugeben und zuzulassen.

Gemäß einer Weiterbildung des Erfindungsgedankens wird die Arretierung des Ausgleichselements bei einer externen Überlastung aufgehoben. Hierzu wird das Feststellelement so ausgelegt, dass die Arretierung bei unvorhergesehen hoher Beschleunigung überwunden wird. Hierzu wird insbesondere die Reibkraft zwischen der Scheibe und der Spannvorrichtung des Feststellelements so ausgelegt oder geregelt, dass ein Durchrutschen bei Überlast auch im arretierten Zustand ermöglicht wird.

Vorzugsweise wird die zu erwartende Beschleunigung aus einem dynamischen Modell des Kommissionierroboters mit aufgenommenem Objekt berechnet. Kommt es durch höhere Beschleunigungen zu einer Bewegung innerhalb des Ausgleichselements, kann automatisch ein Notstop des Kommissionierroboters eingeleitet werden.

Damit erhöht sich eine Crash-Sicherheit des mobilen Kommissionierroboters. Die aufgenommene Ware wird geschützt und geschont. Außerdem ergibt sich auch dadurch ein Sicherheitsgewinn, dass die Gefahr abfallender Gegenstände vermindert ist.

Eine weitere bevorzugte Ausgestaltung der Erfindung sieht vor, dass die Relativbewegungen des Ausgleichselements mittels mindestens eines Sensors erfasst werden, und die Sensordaten des Sensors in der Datenverarbeitungseinrichtung ausgewertet werden, wobei beim Erkennen von Bewegungssignalen, die über ein vorgegebenes Grundrauschen hinausgehen, der Kommissionierroboter automatisch gestoppt wird.

Es werden also insbesondere bei gelöstem Feststellelement die Bewegungen innerhalb des Ausgleichselements abgefragt. Ein Grundrauschen um die Ausgangsposition wird herausgefiltert. Somit kann bei größeren Auslenkungen ein entsprechendes Signal zum Stopp der Bewegung des Lasthandhabungsmanipulators des Kommissionierroboters gegeben werden. Das Packstück ist dann abgelegt und der Spalt zwischen den Packstücken auf dem Zielladungsträger ist geschlossen. Dabei wird ein Verfahren des Lasthandhabungsmanipulators in eine andere Richtung weiterhin ermöglicht.

Um die Zykluszeit zu reduzieren, ist es außerdem von Vorteil, diagonal in die errechnete Sollposition zu fahren, anstatt den Spalt zunächst in x-Richtung und dann in y-Richtung zuzufahren, oder umgekehrt.

In der folgenden Liste sind die wesentlichen Vorteile der Erfindung zusammengestellt:
- Möglichkeit der Ergänzung einer messenden Sensorik beim Ablageprozess auf der Zielpalette;
- Ausgleich der Toleranzen, die bei messender Sensorik entstehen.
- Ausgleich der Toleranzen, die beim Anfahren an die Ablageposition auf der Zielpalette entstehen;
- Ausgleich von auf der Zielpalette entstandenen Toleranzen, z.B. durch Setzung oder Verrücken von Paketen;
- Möglichkeit des spaltfreien Ablegens von Packstücken auf einer gemischten Zielpalette in einem automatisierten Kommissionierprozess;
- Ausgleich von Schiefstellungen zwischen abzulegendem Packstück und Zielpalette, z.B. Zielpalette steht schief, insbesondere bei mobilen Systemen oder Packstück schief gegriffen, durch Freiheitsgrad der Drehung um die z-Achse;
- Feststellelement ermöglicht in der Arretierstellung trotz Nachgiebigkeit im System schnelles Fahren ohne Schwingungen;
- Möglichkeit des gezielten Zu- und Wegschaltens der Nachgiebigkeit.
- Nachgiebigkeit in 4 Freiheitsgraden;
- Skalierbarkeit des Ausgleichselements, so dass die Nachgiebigkeit und der mögliche Weg in allen Freiheitsgraden (auch unabhängig voneinander) angepasst werden kann. Dazu können andere Rückstellelemente, beispielsweise andere Federelemente, und größere Wege genutzt werden. Damit ist ein Anpassen des Ausgleichselements an unterschiedliche Geschwindigkeiten, Paketgrößen und Paketgewichte möglich;
- Das Ausgleichselement ist mit unterschiedlichen Greifern kompatibel. An dem Ausgleichselement können ein Sauggreifer oder ein Backen-, Magnet- oder Klebegreifer angebaut werden.

Weitere Vorteile und Einzelheiten der Erfindung werden anhand der in den schematischen Figuren dargestellten Ausführungsbeispiele näher erläutert. Hierbei zeigen
- Figur 1: einen erfindungsgemäßen mobilen Kommissionierroboter mit Handhabungsmanipulator und Ausgleichselement vor einer Zielpalette in der Seitenansicht,
- Figur 2: eine Prinzipskizze des Ausgleichselements,
- Figur 3: eine Detaildarstellung des Ausgleichselements,
- Figur 4: eine Draufsicht auf die Scheibe des Feststellelements des Ausgleichselements und
- Figur 5: das Feststellelement des Ausgleichselement in einer vergrößerten Darstellung.

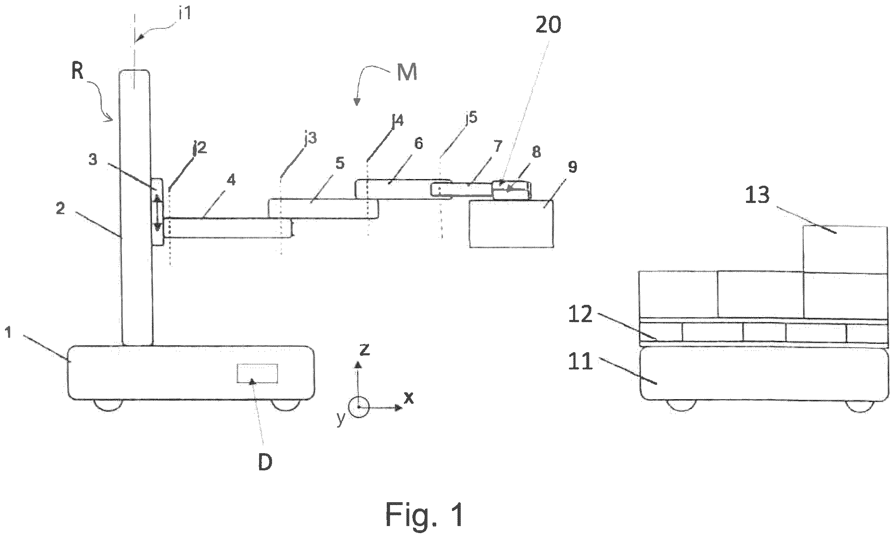

In der Figur 1 ist ein erfindungsgemäßer mobiler Kommissionierroboter R mit einem Handhabungsmanipulator M und Ausgleichselement 20 vor einem als Zielpalette 12 ausgebildeten Zielladungsträger 12 in der Seitenansicht dargestellt. Die Zielpalette 12 ist im dargestellten Ausführungsbeispiel auf einem Begleitfahrzeug 11 angeordnet. Auf der Zielpalette 12 sind Packstücke 13 abgelegt. Es versteht sich, dass alternativ die Zielpalette auch auf dem Kommissionierroboter R mitgeführt werden kann.

Der mobile Kommissionierroboter R weist eine flache Armkinematik eines Lasthandhabungsmanipulators M nach dem so genannten Scara-Prinzip auf. Diese Bauform ist durch ein autonomes Fahrzeug 1 mit einem vertikalen Hubmast 2 und einem daran höhenverfahrbaren Schlitten 3 gekennzeichnet, an dem die flache Kinematik befestigt ist. Der Hubmast 2 stellt die erste vertikale Achse i1 des Lasthandhabungsmanipulators M dar. Am Schlitten 3 ist über die vertikale Achse i2 das erste Armelement 4 der Armkinematik befestigt. An diesem ist über die vertikale Achse i3 das Armelement 5 befestigt. Dort wiederum ist über die vertikale Achse i4 das Armelement 6 und daran über die vertikale Achse i5 das vorderste Armelement 7 befestigt, das das als Greifer 8 ausgebildete Aufnahmewerkzeug 8 trägt. Die Armelemente 4 bis 7 bilden somit einen Roboterarm mit vertikalen Achsen i2 bis i5. Der Greifer 8 ist im vorliegenden Beispiel als Vakuumgreifer 8 ausgeführt, der beispielsweise als Packstücke 9 ausgebildete Objekte 9 von oben greift.

Erfindungsgemäß ist der Greifer 8 an einem Ausgleichselement 20 befestigt. Das Ausgleichselement 20 ist an dem vordersten Armelement 7 befestigt. Durch das Ausgleichselement 20 wird eine Nachgiebigkeit für mehrere Freiheitsgrade ermöglicht.

Das Ausgleichselement 20 weist eine Nachgiebigkeit in x-Richtung, die die horizontale Längsrichtung ist, eine Nachgiebigkeit in y-Richtung, die die horizontale Querrichtung ist, und eine Nachgiebigkeit in z-Richtung, die die vertikale Richtung ist. Zusätzlich kann das Ausgleichselement 20 auch für einen vierten Freiheitsgrad eine Nachgiebigkeit aufweisen, nämlich einer Drehung Ψ um die vertikale z-Richtung.

Der Kommissionierroboter R verfügt außerdem über eine Datenverarbeitungseinrichtung D, die die Nachgiebigkeit des Ausgleichselements 20 aktiv freigibt oder eine Arretierung des Ausgleichselements 20 einleitet.

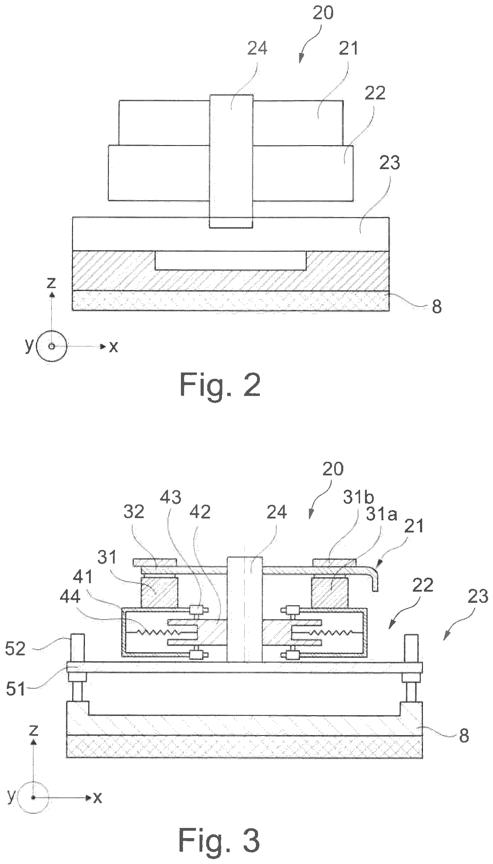

Die Figur 2 zeigt eine Prinzipskizze des Ausgleichselements 20 der Figur 1. Das Ausgleichselement 20 ist aus drei Sektionen aufgebaut, die aus einem Feststellelement 21, einem xy-Element 22 und einem z-Element 23 bestehen. Die Sektionen sind über eine Welle 24 des Ausgleichselements 20 miteinander verbunden. Am Ausgleichselement 20 ist unterhalb des z-Elements 23 der Greifer 8 angebracht. Das Ausgleichselement 20 ermöglicht Relativbewegungen zwischen dem Armelement 7 auf der einen Seite und dem Greifer 8 mit dem Packstück 9 auf der anderen Seite in x-Richtung, in y-Richtung, in z-Richtung und eine Drehbewegung Ψ um die vertikale z-Richtung. Hierzu ermöglicht das xy-Element 20 Relativbewegungen und somit Nachgiebigkeiten in x-Richtung, in y-Richtung und die Drehung Ψ um die vertikale z-Richtung. Das z-Element 23 ermöglicht eine Relativbewegung und somit eine Nachgiebigkeit z-Richtung.

Der Greifer 8 ist im dargestellten Ausführungsbeispiel als Vakuumgreifer, bestehend aus einer Vakuumkammer und einer Schaumauflage, dargestellt. Andere Greifertypen sind jedoch ebenfalls denkbar, beispielsweise Backengreifer oder Magnetgreifer oder Klebegreifer.

Die Figur 3 zeigt eine Detaildarstellung des Ausgleichselements 20 der Figuren 1 und 2.

Das xy-Element 22 des Ausgleichselement 20 weist ein Gehäuse 41 und einen in dem Gehäuse 41 schwimmend gelagerten Teller 42 auf. Das Ausgleichselement 20 ist über das Gehäuse 41 des xy-Elements 22 am Lasthandhabungsmanipulator M, im dargestellten Ausführungsbeispiel an dem Armelement 7, befestigt. Im Gehäuse 41 kann sich in der xy-Ebene schwimmend der Teller 42 bewegen. Dabei sind sowohl Bewegungen in x-Richtung und in y- Richtung, als auch Drehbewegungen Ψ um die z-Achse möglich. Dabei ist eine rollende Bewegung anzustreben, um die Reibungskräfte klein zu halten. Das wird durch den Einsatz einer Kugelrollenlagerung 43 mit Kugelrollen 43 gelöst. Die Kugelrollen 43 erlauben eine reibungsarme und allseitige Bewegung des Tellers 42 im Gehäuse 41. Der Teller 42 ist an der Welle 24 des Ausgleichselements 20 starr befestigt.

Eine Rückstellung des Tellers 42 in die zentrierte Ausgangslage erfolgt über Rückstellelemente 44. Die Rückstellelemente 44 sind im vorliegenden Ausführungsbeipiel als am Umfang des Tellers 42 angebrachte Federelemente 44 ausgebildet. Die Federelemente 44 verbinden das Gehäuse 41 mit dem Teller 42. Im dargestellten Ausführungsbeispiel sind die Federelemente 44 als Zugfedern ausgebildet.

Über die Steifigkeit, die Anordnung - radial oder tangential oder Mischformen - und Anzahl der Federelemente 44 können die Rückstellkräfte des Tellers 42 eingestellt werden. Die Rückstellkräfte und Rückstellmomente müssen zum bewegten Packstück passen, sodass bei leichten Packstücken - oder solchen, die leicht umfallen - eher kleine Reaktionskräfte in Folge einer Kollision entstehen. Sowohl laterale als auch winklige Verschiebungen können dabei zurückgestellt werden.

Die Welle 24 stellt die Verbindung von dem xy-Element 22 zu dem Feststellelement 21 her. Das Feststellelement 21 dient dazu, die im xy-Element 22 eingestellte Position zu arretieren, oder eine weitere Bewegung in dem xy-Element 22 zuzulassen. Ein Arretieren ist insbesondere bei schnellen Bewegungen und großen Beschleunigungen sinnvoll, um Schwingungen im System zu verhindern.

Verfahrensseitig ist vorteilhaft, dass das Ausgleichselement 20 durch das Feststellelement 21 über weite Strecken des Greifzyklus eines Objekts 9 arretiert ist und erst in unmittelbarer Nähe zum Ablageort auf der Zielpalette eine Bewegung im xy-Element 22 zugelassen wird.

Das Feststellelement 21 weist eine Scheibe 32 und eine Spannvorrichtung 31 auf. Die Spannvorrichtung 31 besteht aus zwei axial, d.h. in Längsrichtung der Welle 24, zueinander beweglichen Klemmelementen 31a, 31b, zwischen denen die Scheibe 32 angeordnet ist. Die Scheibe 32 ist verdrehfest mit der Welle 24 verbunden und an der Welle 24 in Längsrichtung verschiebbar angeordnet.

Die Arretierung wird zwischen der Scheibe 32 des Feststellelements 21 und der, im vorliegenden Beispiel magnetischen, Spannvorrichtung 31 erzeugt. Die Spannvorrichtung 31 besteht aus dem oberen Klemmelement 31b und dem unteren Klemmelement 31a, wobei die beiden Klemmelemente 31a, 31b axial zueinander, d.h. in Längsrichtung der Welle 24, beweglich sind. Die beiden Klemmelemente 31a, 31b werden mittels eines in der Figur 3 nicht dargestellten Lüftungs-elements, beispielsweise eines Lüftungs-Magneten, gelüftet und mittels eines ebenfalls nicht gezeigten Brems-Elements, beispielsweise einer Brems-Feder, zueinander bewegt, um die Scheibe 32 zu arretieren.

Im dargestellten Ausführungsbeispiel ist das Klemmelement 31a an der Oberseite des Gehäuses 41 des xy-Elements 22 befestigt.

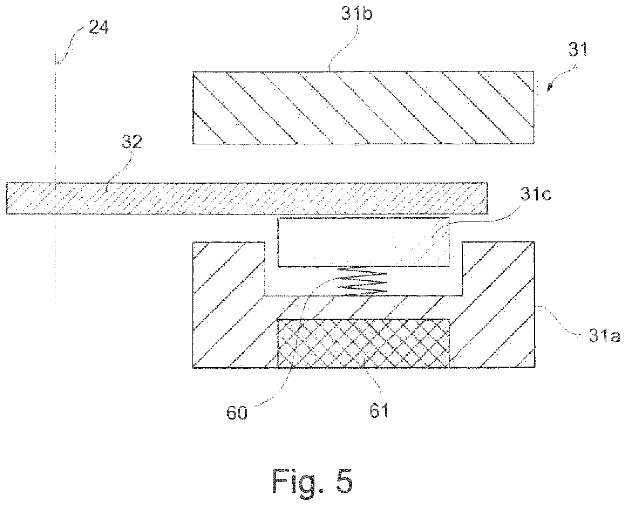

In der Figur 5 ist das Feststellelement 21 in einer möglichen Ausführungsform dargestellt. Die Figur 5 zeigt die beiden Klemmelemente 31a, 31b der Spannvorrichtung 31 zwischen denen die Scheibe 32 angeordnet ist. Das untere Klemmelement 31a ist mit einem axial, d.h. in Längsrichtung der Welle 24, verschiebbar angeordneten Element 31c versehen, das von mindestens einer Brems-Feder 60 als Brems-Element nach in der Figur 5 vertikal oben in eine Bremsstellung des Feststellelements 21 beaufschlagbar ist, in der die Scheibe 32 zwischen den beiden Klemmelementen 31a, 31b eingeklemmt und somit arretiert ist, und mittels mindestens eines in dem Klemmelement 31a angeordneten Lüftungs-Magneten 61 als Lüftungs-Element nach in der Figur 5 vertikal unten in eine Lösestellung des Feststellelements 21 beaufschlagt ist. Der Lüftungs-Magnet 61 ist bevorzugt als Elektro-Magnet ausgebildet. Die Spannvorrichtung 31 ist somit als elektrisch lüftbare Federspeicherbremse ausgebildet.

Verfahrensseitig wird die Reibkraft zwischen der Scheibe 32 und der Spannvorrichtung 31 so geregelt, dass ein Durchrutschen der Scheibe 32 bei Überlast auch im arretierten Zustand ermöglicht wird. Damit gewinnt der Kommissionierroboter R Crash-Sicherheit, die aufgenommene Ware wird geschützt und die Umgebungssicherheit wird erhöht, da ein Abfallen von Gegenständen verhindert wird.

Die Scheibe 32 ist verdrehsteif, aber axial verschieblich auf der Welle 24 befestigt und kann so einen Spalt zur Spannvorrichtung 31 aufmachen.

An der Welle 24 ist am unteren Ende das z-Element 23 befestigt. Das z-Element 23 besteht aus einem Träger 51, der an der Welle 24 starr befestigt ist und an dem Elastizitätselemente 52 angeordnet sind, an denen der Greifer 8 befestigt ist. Zwischen dem Träger 51 des z-Elements 23 und dem Greifer 8 ermöglichen die Elastizitätselemente 52 eine Ausgleichsbewegung in vertikaler z-Richtung. Im dargestellten Ausführungsbeispiel sind die Elastizitätselemente 52 als Federstößel 52 ausgebildet.

Alle Bewegungen innerhalb des Ausgleichselementes 20 werden mit in den Figuren 1 bis 3 nicht dargestellten Sensoren überwacht. Insbesondere werden Bewegungen in x-Richtung und y-Richtung durch einen berührungslosen Wegmesssensor erfasst. Zu diesem Zweck ist die Scheibe 32 an zwei orthogonal angeordneten Stellen abgekantet und bildet so Messflächen, die abgetastet werden können.

Alternativ kann die Bewegung des Tellers 42 relativ zum Gehäuse 41 berührungslos vermessen werden.

Vorteilhafterweise wird auch eine z-Bewegung berührungslos abgetastet. Hierfür eignet sich der Bereich der Federstößel 52.

Verfahrensseitig wird vorgeschlagen, bei gelöstem Feststellelement 21 die Bewegungen innerhalb des Ausgleichselementes 20 abzufragen. Ein Grundrauschen um die zentrierte Ausgangsposition ist dabei geeignet zu filtern und bei größeren Auslenkungen ein entsprechendes Signal zum Stopp der Bewegung des Lasthandhabungsmanipulators M des Kommissionierroboters R einzuleiten. Das Packstück 9 ist dann abgelegt und der Spalt zwischen den Packstücken 13 auf der Zielpalette 12 ist dann geschlossen. Ein Verfahren des Greifers 8 in die andere Richtung wird hierbei weiterhin ermöglicht.

Die maximalen Wege der Relativbewegungen innerhalb des Ausgleichselements 20 sind durch die Größen von Teller 42 und Gehäuse 41 in x-Richtung und y-Richtung vorgegeben. Die Rückhalteelemente 44 müssen dementsprechend ausgelegt werden.

Die maximalen Wege der Bewegungen innerhalb des Ausgleichselements 20 in z-Richtung werden durch die Verfahrwege der Federstößel 52 eingestellt. Werden beispielsweise vier Federstößel 52 in den vier Ecken des Trägers 51 verwendet, so können auch Unebenheiten beim Ablegen des Objekts 9 ausgeglichen werden, so dass sich zwei zusätzliche Freiheitsgrade ergeben. Eine Bewegung in z-Richtung wird in diesem Fall vorteilhafterweise an mehreren Punkten durch Sensoren abgefragt.

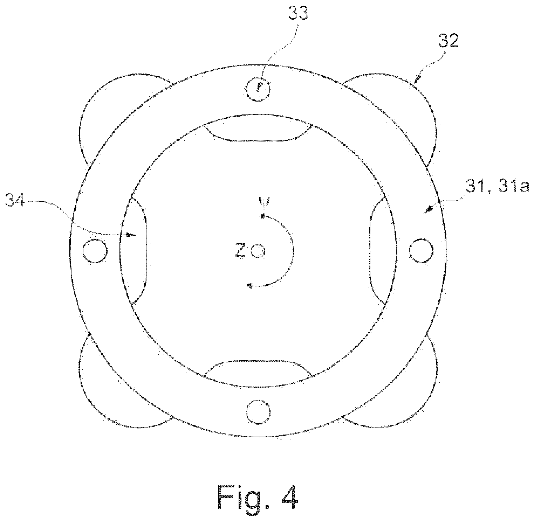

In der Figur 4 ist eine Draufsicht auf die Scheibe 32 des Feststellelements 21 des Ausgleichselements 20 dargestellt. Die maximal möglichen Verdrehwinkel Ψ um die z-Achse werden durch Freistiche in der Scheibe 32 eingestellt. Die zwei Klemmelemente 31a, 31b der Spannvorrichtung 31 sind miteinander mittels Schrauben 33 verschraubt. Um die Schrauben 33 werden in der Scheibe 32 Aussparungen 34 vorgesehen, die die überlagerten Bewegungen in x-Richtung und y-Richtung sowie die Drehung um den Verdrehwinkel Ψ ermöglichen.

Die Erfindung ist nicht auf die in den Figuren dargestellte Ausführungsform beschränkt.

Das Feststellelement 21 kann alternativ als Aktor mit einer elektro-rheologischen Flüssigkeit ausgeführt sein. Ein derartiger Aktor kann ebenfalls zwischen einer arretierten Stellung (Bremsstellung) und einer offenen Stellung (Lösestellung) geschaltet werden und ermöglicht es, einen Dämpfungsgrad einzustellen.

## Patentansprüche

1. Mobiler Kommissionierroboter (R) zur automatischen Kommissionierung von Objekten (9) mit einem Lasthandhabungsmanipulator (M), der einen Roboterarm (4, 5, 6, 7) und ein mit dem Roboterarm (4, 5, 6, 7) in Verbindung stehendes Aufnahmewerkzeug (8) zur Aufnahme der Objekte (9) umfasst, wobei zwischen dem Roboterarm (4, 5, 6, 7) und dem Aufnahmewerkzeug (8) ein Ausgleichselement (20) vorgesehen ist, das Relativbewegungen zwischen dem Roboterarm (4, 5, 6, 7) auf der einen Seite und dem Aufnahmewerkzeug (8) auf der anderen Seite ermöglicht, wobei das Ausgleichselement (20) aus mindestens drei Sektionen aufgebaut ist, die ein Feststellelement (21), ein xy-Element (22) und ein z-Element (23) umfassen, wobei das xy-Element (22) Relativbewegungen in einer xy-Ebene ermöglicht und das z-Element (23) Relativbewegungen in z-Richtung senkrecht zur xy-Ebene ermöglicht und das Feststellelement (21) eine Arretierung des xy-Elements (22) ermöglicht, wobei das Feststellelement (21), das xy-Element (22) und das z-Element (23) über eine gemeinsame Welle (24) miteinander verbunden sind, wobei das xy-Element (22) ein Gehäuse (41) und einen im Gehäuse (41) schwimmend gelagerten Teller (42) umfasst,
**dadurch gekennzeichnet, dass** das Ausgleichselement (20) über das xy-Element (22) mit dem Roboterarm (4,5,6,7) und über das z-Element (23) mit dem Aufnahmewerkzeug (8) verbunden ist, wobei das Gehäuse (41) des xy-Elements (22) am Roboterarm (4, 5, 6, 7) befestigt ist und der Teller (42) starr an der Welle (24) befestigt ist, und wobei das Feststellelement (21) eine Scheibe (32) und eine Spannvorrichtung (31) umfasst, wobei die Scheibe (32) verdrehsteif an der Welle (24) befestigt ist und die Spannvorrichtung (31) mindestens zwei axial zueinander bewegliche Klemmelemente (31a, 31b) aufweist, zwischen denen die Scheibe (32) einklemmbar ist, und das z-Element (23) einen an der Welle (24) befestigten Träger (51) umfasst, an dem über mindestens ein Elastizitätselement (52) das Aufnahmewerkzeug (8) befestigt ist.

2. Mobiler Kommissionierroboter (R) nach Anspruch 1, **dadurch gekennzeichnet, dass** die schwimmende Lagerung des Tellers (42) des xy-Elements (22) neben Bewegungen in x- und y-Richtung auch Drehbewegungen (Ψ) um die z-Achse ermöglicht.

3. Mobiler Kommissionierroboter (R) nach Anspruch 1 oder 2, **dadurch gekennzeichnet, dass** die schwimmende Lagerung des Tellers (42) des xy-Elements (22) eine Kugelrollenlagerung (43) umfasst.

4. Mobiler Kommissionierroboter (R) nach einem der Ansprüche 1 bis 3, **dadurch gekennzeichnet, dass** zwischen dem Gehäuse (41) und dem Teller (42) des xy-Elements (22) mindestens ein Rückstellelement (44) vorgesehen ist, das eine Rückstellung des Tellers (42) in eine, insbesondere zentrierte, Ausgangslage ermöglicht.

5. Mobiler Kommissionierroboter (R) nach Anspruch 4, **dadurch gekennzeichnet, dass** das Rückstellelement (44) mindestens ein Federelement (44), insbesondere eine Zugfeder oder Druckfeder, und/oder mindestens ein elastisches Bandelement und/oder mindestens einen hydraulischen oder pneumatischen Druckzylinder, und/oder mindestens ein Magnetlager umfasst.

6. Mobiler Kommissionierroboter (R) nach Anspruch 4 oder 5, **dadurch gekennzeichnet, dass** das Rückstellelement (44) eine Einstelleinrichtung zur Einstellung einer Rückstellkraft aufweist.

7. Mobiler Kommissionierroboter (R) nach einem der Ansprüche 1 bis 6, **dadurch gekennzeichnet, dass** die axial zueinander beweglichen Klemmelemente (31a, 31b) der Spannvorrichtung (31) des Feststellelements (21) mit einem Lüftungs-Element und einem Brems-Element verbunden sind, wobei die Klemmelemente (31a, 31b) mittels des Lüftungs-Elementes von der Scheibe (32) des Feststellelements (21) abhebbar sind und mittels des Brems-Elementes zueinander bewegbar sind.

8. Mobiler Kommissionierroboter (R) nach Anspruch 7, **dadurch gekennzeichnet, dass** das Lüftungs-Element als Lüftungs-Magnet (61), insbesondere Elektromagnet, und das Brems-Element als Brems-Feder (60) ausgebildet sind.

9. Mobiler Kommissionierroboter (R) nach einem der Ansprüche 1 bis 8, **dadurch gekennzeichnet, dass** die Scheibe (32) des Feststellelements (21) verdrehsteif, aber axial verschieblich auf der Welle (24) befestigt ist.

10. Mobiler Kommissionierroboter (R) nach einem der Ansprüche 1 bis 9, **dadurch gekennzeichnet, dass** das Elastizitätselement (52) des z-Elements als Federstößel (52) ausgebildet ist.

11. Mobiler Kommissionierroboter (R) nach einem der Ansprüche 1 bis 10, **dadurch gekennzeichnet, dass** das Ausgleichselement (20) mindestens einen Sensor aufweist, der die Relativbewegungen misst.

12. Mobiler Kommissionierroboter (R) nach Anspruch 11, **dadurch gekennzeichnet, dass** der Sensor im Bereich der Scheibe (32) des Feststellelements (21) angeordnet ist und zur Messung der Bewegungen der Scheibe (32) ausgebildet ist.

13. Mobiler Kommissionierroboter (R) nach Anspruch 12, **dadurch gekennzeichnet, dass** die Scheibe (32) an mindestens zwei orthogonal angeordneten Stellen abgekantet ist, die vom Sensor abtastbar sind.

14. Mobiler Kommissionierroboter (R) nach einem der Ansprüche 11 bis 13, **dadurch gekennzeichnet, dass** der Sensor im Gehäuse des xy-Elements (22) angeordnet und zur Messung der Bewegungen des Tellers (42) im Gehäuse (41) ausgebildet ist.

15. Mobiler Kommissionierroboter (R) nach einem der Ansprüche 11 bis 14, **dadurch gekennzeichnet, dass** der Sensor im Bereich des Elastizitätselements (52) des z-Elements (23) angeordnet und zur Messung der Bewegungen des Elastizitätselements (52) in z-Richtung ausgebildet ist.

16. Mobiler Kommissionierroboter (R) nach einem der Ansprüche 11 bis 15, **dadurch gekennzeichnet, dass** der Sensor als berührungsloser Sensor oder optischer Sensor oder Berührungssensor oder Kraftsensor ausgebildet ist.

17. Mobiler Kommissionierroboter (R) nach einem der Ansprüche 1 bis 16, **dadurch gekennzeichnet, dass** die Klemmelemente (31a, 31b) der Spannvorrichtung (31) des Feststellelements (21) mittels Schrauben (33) miteinander verschrauben sind, wobei die Scheibe (32) um die Schrauben (33) Aussparungen (34) aufweist, die die Relativbewegungen der Scheibe (32) ermöglichen.

18. Mobiler Kommissionierroboter (R) nach einem der Ansprüche 1 bis 17, **dadurch gekennzeichnet, dass** der Lasthandhabungsmanipulator (M) einen vertikal ausgerichteten Hubmast (2) und einen daran höhenbeweglich angebrachten, horizontal ausgerichteten Roboterarm mit mehreren vom Hubmast (2) ausgehend aneinander gereihten Armelementen (4, 5, 6, 7) mit aufsteigender Nummerierung aufweist, welche über Armgelenke (i2, i3, i4, i5) mit vertikalen Armgelenksdrehachsen verfügen, wobei an dem letzten am äußeren Reihenende angeordnete Armelement (7) das Ausgleichselement (20) angeordnet ist, an dem das Aufnahmewerkzeug (8) befestigt ist.

19. Verfahren zum Betreiben des mobilen Kommissionierroboters (R) nach einem der Ansprüche 1 bis 18, **dadurch gekennzeichnet, dass** der Kommissionierroboter (R) zwischen einem Quellladungsträger, von dem das Objekt (9) aufgenommen wird, und einem Zielladungsträger (12), auf dem das Objekt (9) abgelegt wird, gefahren wird, und beim Aufnehmen und/oder Ablegen des Objekts (9) die Relativbewegungen des Ausgleichselements (20) von einer Datenverarbeitungseinrichtung (D) freigegeben werden.

20. Verfahren nach Anspruch 19, **dadurch gekennzeichnet, dass** der Kommissionierroboter (R) mit dem aufgenommenen Objekt (9) zu dem Zielladungsträger (12) gefahren wird, der Zielladungsträger (12) mittels einer Umfeldsensorik erfasst wird, und die Sensordaten der Umfeldsensorik in der Datenverarbeitungseinrichtung (D) ausgewertet werden, wobei eine vorgesehene Ablageposition für das Objekt (9) auf dem Zielladungsträger (12) in vier Freiheitsgraden, die von der horizontalen x-Richtung, insbesondere der horizontalen Längsrichtung, der horizontalen y-Richtung, insbesondere der horizontalen Querrichtung, der vertikalen z-Richtung und der Drehung Ψ um die z-Richtung gebildet sind, verifiziert wird, der Lasthandhabungsmanipulator (M) mit Sicherheitsabständen in x-Richtung, y-Richtung und z-Richtung an die Ablageposition herangefahren wird, entstandene Spalte in x-Richtung, y-Richtung und Ψ-Richtung mittels des Ausgleichselements (20) zugefahren werden, und durch Zufahren des Spaltes in z-Richtung das Objekt (9) abgelegt wird.

21. Verfahren nach Anspruch 19 oder 20, **dadurch gekennzeichnet, dass** das Ausgleichselement (20) beim Fahren des Kommissionierroboters (R) arretiert wird und erst beim Heranfahren des Lasthandhabungsmanipulators (M) zur Aufnahme- oder Ablageposition freigegeben wird.

22. Verfahren nach Anspruch 21, **dadurch gekennzeichnet, dass** die Arretierung des Ausgleichselements (20) bei einer externen Überlastung aufgehoben wird.

23. Verfahren nach einem der Ansprüche 19 bis 22, **dadurch gekennzeichnet, dass** die Relativbewegungen des Ausgleichselements (20) mittels mindestens eines Sensors erfasst werden, und die Sensordaten des Sensors in der Datenverarbeitungseinrichtung (D) ausgewertet werden, wobei beim Erkennen von Bewegungssignalen, die über ein vorgegebenes Grundrauschen hinausgehen, der Kommissionierroboter (R) automatisch gestoppt wird.

## Claims

1. Mobile order-picking robot (R) for the automatic order-picking of objects (9) with a load handling manipulator (M) which comprises a robot arm (4, 5, 6, 7) and a pick-up tool (8), connected to the robot arm (4, 5, 6, 7), for picking up the objects (9), wherein a compensating element (20), which enables relative movements between the robot arm (4, 5, 6, 7) on one side and the pick-up tool (8) on the other side, is provided between the robot arm (4, 5, 6, 7) and the pick-up tool (8), wherein the compensating element (20) is constructed from at least three sections which comprise a locking element (21), an xy element (22) and a z element (23), wherein the xy element (22) enables relative movements in an xy plane, and the z element (23) enables relative movements in the z direction perpendicular to the xy plane, and the locking element (21) enables immobilization of the xy element (22), wherein the locking element (21), the xy element (22) and the z element (23) are connected to each other via a common shaft (24), wherein the xy element (22) comprises a housing (41) and a plate (42) mounted in floating fashion in the housing (41), **characterized in that** the compensating element (20) is connected to the robot arm (4, 5, 6, 7) via the xy element (22) and to the pick-up tool (8) via the z element (23), wherein the housing (41) of the xy element (22) is fastened to the robot arm (4, 5, 6, 7) and the plate (42) is rigidly fastened to the shaft (24), and wherein the locking element (21) comprises a disc (32) and a tightening means (31), wherein the disc (32) is fastened to the shaft (24) so that it is torsionally rigid and the tightening means (31) has at least two clamping elements (31a, 31b) which can move axially relative to each other and between which the disc (32) can be clamped, and the z element (23) comprises a support (51) fastened to the shaft (24) and to which the pick-up tool (8) is fastened via at least one elastic element (52).

2. Mobile order-picking robot (R) according to Claim 1, **characterized in that** the floating mounting of the plate (42) of the xy element (22) enables rotational movements (Ψ) about the z axis in addition to movements in the x and y direction.

3. Mobile order-picking robot (R) according to Claim 1 or 2, **characterized in that** the floating mounting of the plate (42) of the xy element (22) comprises a ball roller bearing (43).

4. Mobile order-picking robot (R) according to one of Claims 1 to 3, **characterized in that** at least one restoring element (44), which enables the plate (42) to be restored to an in particular centred starting position, is provided between the housing (41) and the plate (42) of the xy element (22).

5. Mobile order-picking robot (R) according to Claim 4, **characterized in that** the restoring element (44) comprises at least one spring element (44), in particular a tension spring or a pressure spring, and/or at least one elastic strip element and/or at least one hydraulic or pneumatic pressure cylinder and/or at least one magnetic bearing.

6. Mobile order-picking robot (R) according to Claim 4 or 5, **characterized in that** the restoring element (44) has a setting device for setting a restoring force.

7. Mobile order-picking robot (R) according to one of Claims 1 to 6, **characterized in that** the clamping elements (31a, 31b), which can move axially relative to each other, of the tightening means (31) of the locking element (21) are connected to a brake-release element and to a braking element, wherein the clamping elements (31a, 31b) can be lifted off from the disc (32) of the locking element (21) by means of the brake-release element and can be moved towards each other by means of the braking element.

8. Mobile order-picking robot (R) according to Claim 7, **characterized in that** the brake-release element is configured as a brake-release magnet (61), in particular an electromagnet, and the braking element is configured as a braking spring (60).

9. Mobile order-picking robot (R) according to one of Claims 1 to 8, **characterized in that** the disc (32) of the locking element (21) is fastened to the shaft (24) so that it is torsionally rigid but axially displaceable.

10. Mobile order-picking robot (R) according to one of Claims 1 to 9, **characterized in that** the elastic element (52) of the z element is configured as a spring plunger (52) .

11. Mobile order-picking robot (R) according to one of Claims 1 to 10, **characterized in that** the compensating element (20) has at least one sensor which measures the relative movements.

12. Mobile order-picking robot (R) according to Claim 11, **characterized in that** the sensor is arranged in the region of the disc (32) of the locking element (21) and is configured to measure the movements of the disc (32).

13. Mobile order-picking robot (R) according to Claim 12, **characterized in that** the disc (32) is folded down at at least two orthogonally arranged points which can be scanned by the sensor.

14. Mobile order-picking robot (R) according to one of Claims 11 to 13, **characterized in that** the sensor is arranged in the housing of the xy element (22) and is configured to measure the movements of the plate (42) in the housing (41).

15. Mobile order-picking robot (R) according to one of Claims 11 to 14, **characterized in that** the sensor is arranged in the region of the elastic element (52) of the z element and is configured to measure the movements of the elastic element (52) in the z direction.

16. Mobile order-picking robot (R) according to one of Claims 11 to 15, **characterized in that** the sensor is configured as a contact-free sensor or optical sensor or contact sensor or force sensor.

17. Mobile order-picking robot (R) according to one of Claims 1 to 16, **characterized in that** the clamping elements (31a, 31b) of the tightening means (31) of the locking element (21) are screwed to each other by means of screws (33), wherein the disc (32) has relieved portions (34), around the screws (33), which enable the relative movements of the disc (32).

18. Mobile order-picking robot (R) according to one of Claims 1 to 17, **characterized in that** the load handling manipulator (M) has a vertically oriented lifting mast (2) and a horizontally oriented robot arm which is attached thereto so that it can move vertically and with a plurality of arm elements (4, 5, 6, 7) which are arranged in a row starting from the lifting mast (2), their numbering increasing, and feature arm joints (i2, i3, i4, i5) with vertical arm joint pivot axes, wherein the compensating element (20) to which the pick-up tool (8) is fastened is arranged at the last arm element (7) arranged at the outer end of the row.

19. Method for operating the mobile order-picking robot (R) according to one of Claims 1 to 18, **characterized in that** the order-picking robot (R) is moved between a source load support from which the object (9) is picked up and a target load support (12) on which the object (9) is deposited, and the relative movements of the compensating element (20) are released by a data processing device (D) when picking up and/or depositing the object (9).

20. Method according to Claim 19, **characterized in that** the order-picking robot (R) with the picked-up object (9) is moved to the target load support (12), the target load support (12) is detected by means of environment sensors and the sensor data of the environment sensors are evaluated in the data processing device (D), wherein an intended depositing position for the object (9) on the target load support (12) is verified in four degrees of freedom which are formed by the horizontal x direction, in particular the horizontal longitudinal direction, the horizontal y direction, in particular the horizontal transverse direction, the vertical z direction and the rotation Ψ about the z direction, the load handling manipulator (M) is moved to the depositing position with safety distances in the x direction, y direction and z direction, gaps formed in the x direction, y direction and Ψ direction are closed by means of the compensating element (20) and the object (9) is deposited by closing the gap in the z direction.

21. Method according to Claim 19 or 20, **characterized in that** the compensating element (20) is immobilized when the order-picking robot (R) moves and is released only when the load handling manipulator (M) is moved to the pick-up or depositing position.

22. Method according to Claim 21, **characterized in that** the immobilization of the compensating element (20) is cancelled in the event of an external overload.

23. Method according to one of Claims 19 to 22, **characterized in that** the relative movements of the compensating element (20) are detected by means of at least one sensor, and the sensor data of the sensor are evaluated in the data processing device (D), wherein the order-picking robot (R) is automatically stopped when movement signals which exceed a predetermined background noise are identified.

## Revendications

1. Robot mobile de préparation de commandes (R) servant à la préparation automatique de commandes d'objets (9) à l'aide d'un manipulateur de charge (M) qui comprend un bras de robot (4, 5, 6, 7) et un outil de prélèvement (8) en liaison avec le bras de robot (4, 5, 6, 7) pour prélever les objets (9), dans lequel, entre le bras de robot (4, 5, 6, 7) et l'outil de prélèvement (8), un élément de compensation (20) est prévu qui permet des mouvements relatifs entre le bras de robot (4, 5, 6, 7) d'une part, et l'outil de prélèvement (8) d'autre part, dans lequel l'élément de compensation (20) est composé d'au moins trois sections qui comprennent un élément de blocage (21), un élément xy (22) et un élément z (23), dans lequel l'élément xy (22) permet des mouvements relatifs dans un plan xy, et l'élément z (23) permet des mouvements relatifs dans la direction z perpendiculairement au plan xy, et l'élément de blocage (21) permet d'arrêter l'élément xy (22), dans lequel l'élément de blocage (21), l'élément xy (22) et l'élément z (23) sont reliés ensemble par un arbre commun (24), dans lequel l'élément xy (22) comprend un boîtier (41) et un plateau (42) monté flottant dans le boîtier (41),
**caractérisé en ce que** l'élément de compensation (20) est relié au bras de robot (4, 5, 6, 7) par l'intermédiaire de l'élément xy (22) et à l'outil de prélèvement (8) par l'intermédiaire de l'élément z (23), dans lequel le boîtier (41) de l'élément xy (22) est fixé au bras de robot (4, 5, 6, 7), et le plateau (42) est fixé rigidement à l'arbre (24), et dans lequel l'élément de blocage (21) comprend un disque (32) et un dispositif tendeur (31), dans lequel le disque (32) est fixé à l'arbre (24)de manière verrouillée en rotation, et le dispositif tendeur (31) présente au moins deux éléments de serrage (31a, 31b) axialement mobiles l'un par rapport à l'autre, entre lesquels le disque (32) peut être serré, et l'élément z (23) comprend un support (51) fixé à l'arbre (24) et auquel est fixé l'outil de prélèvement (8) par l'intermédiaire d'au moins un élément d'élasticité (52).

2. Robot mobile de préparation de commandes (R) selon la revendication 1, **caractérisé en ce que** le montage flottant du plateau (42) de l'élément xy (22) permet en plus des mouvements dans la direction x et y également des rotations (ψ) autour de l'axe z.

3. Robot mobile de préparation de commandes (R) selon la revendication 1 ou 2, **caractérisé en ce que** le montage flottant du plateau (42) de l'élément xy (22) comprend un montage sur rouleaux cylindriques (43).

4. Robot mobile de préparation de commandes (R) selon l'une quelconque des revendications 1 à 3, **caractérisé en ce qu'**entre le boîtier (41) et le plateau (42) de l'élément xy (22), au moins un élément de rappel (44) est prévu qui permet de rappeler le plateau (42) dans une position initiale, en particulier centrée.

5. Robot mobile de préparation de commandes (R) selon la revendication 4, **caractérisé en ce que** l'élément de rappel (44) comprend au moins un élément faisant ressort (44), en particulier un ressort de traction ou un ressort de compression, et/ou au moins un élément de bande élastique et/ou au moins un vérin hydraulique ou pneumatique, et/ou au moins un palier magnétique.

6. Robot mobile de préparation de commandes (R) selon la revendication 4 ou 5, **caractérisé en ce que** l'élément de rappel (44) présente un moyen de réglage pour régler une force de rappel.

7. Robot mobile de préparation de commandes (R) selon l'une quelconque des revendications 1 à 6, **caractérisé en ce que** les éléments de serrage (31a, 31b) axialement mobiles l'un par rapport à l'autre du dispositif tendeur (31) de l'élément de blocage (21) sont reliés à un élément de soulèvement et à un élément de freinage, dans lequel les éléments de serrage (31a, 31b) peuvent être enlevés du disque (32) de l'élément de blocage (21) au moyen de l'élément de soulèvement et peuvent être rapprochés l'un de l'autre au moyen de l'élément de freinage.

8. Robot mobile de préparation de commandes (R) selon la revendication 7, **caractérisé en ce que** l'élément de soulèvement est réalisé sous forme d'aimant de soulèvement (61), en particulier d'électroaimant, et l'élément de freinage est réalisé sous forme de ressort de frein (60).

9. Robot mobile de préparation de commandes (R) selon l'une quelconque des revendications 1 à 8, **caractérisé en ce que** le disque (32) de l'élément de blocage (21) est fixé à l'arbre (24) de manière verrouillée en rotation mais axialement mobile.

10. Robot mobile de préparation de commandes (R) selon l'une quelconque des revendications 1 à 9, **caractérisé en ce que** l'élément d'élasticité (52) de l'élément z est réalisé sous forme de poussoir à ressort (52).

11. Robot mobile de préparation de commandes (R) selon l'une quelconque des revendications 1 à 10, **caractérisé en ce que** l'élément de compensation (20) présente au moins un capteur qui mesure les mouvements relatifs.

12. Robot mobile de préparation de commandes (R) selon la revendication 11, **caractérisé en ce que** le capteur est disposé au niveau du disque (32) de l'élément de blocage (21) et est réalisé pour mesurer les mouvements du disque (32).

13. Robot mobile de préparation de commandes (R) selon la revendication 12, **caractérisé en ce que** le disque (32) est replié à au moins deux endroits disposés orthogonalement qui peuvent être balayés par le capteur.

14. Robot mobile de préparation de commandes (R) selon l'une quelconque des revendications 11 à 13, **caractérisé en ce que** le capteur est disposé dans le boîtier de l'élément xy (22) et est réalisé pour mesurer les mouvements du plateau (42) dans le boîtier (41) .

15. Robot mobile de préparation de commandes (R) selon l'une quelconque des revendications 11 à 14, **caractérisé en ce que** le capteur est disposé au niveau de l'élément d'élasticité (52) de l'élément x (23) et est réalisé pour mesurer les mouvements de l'élément d'élasticité (52) dans la direction z.

16. Robot mobile de préparation de commandes (R) selon l'une quelconque des revendications 11 à 15, **caractérisé en ce que** le capteur est réalisé sous forme de capteur sans contact ou de capteur optique ou de capteur à contact ou de capteur de force.

17. Robot mobile de préparation de commandes (R) selon l'une quelconque des revendications 1 à 16, **caractérisé en ce que** les éléments de serrage (31a, 31b) du dispositif tendeur (31) de l'élément de blocage (21) sont vissés ensemble au moyen de vis (33), dans lequel le disque (32) présente des évidements (34) autour des vis qui permettent des mouvements relatifs du disque (32) .

18. Robot mobile de préparation de commandes (R) selon l'une quelconque des revendications 1 à 17, **caractérisé en ce que** le manipulateur de charge (M) présente un mât de levage (2) aligné verticalement et un bras de robot raccordé à celui-ci de manière mobile en hauteur, aligné horizontalement, et pourvu de plusieurs éléments de bras (4, 5, 6, 7) qui se succèdent en partant du mât de levage (2) avec une numérotation croissante, et qui disposent d'articulations de bras (i2, i3, i4, i5) à axes de rotation d'articulation de bras verticaux, dans lequel l'élément de compensation (20) auquel est fixé l'outil de prélèvement (8) est disposé au niveau du dernier élément de bras (7) disposé à l'extrémité de rangée extérieure.

19. Procédé permettant de faire fonctionner le robot mobile de préparation de commandes (R) selon l'une quelconque des revendications 1 à 18, **caractérisé en ce que** le robot de préparation de commandes (R) est reçu entre un support de charge source, à partir duquel l'objet (9) est prélevé, et un support de charge cible (12) sur lequel l'objet (9) est déposé, déplacé, et lorsque l'objet (9) est prélevé et/ou déposé, les mouvements relatifs de l'élément de compensation (20) sont libérés par un moyen de traitement de données (D).

20. Procédé selon la revendication 19, **caractérisé en ce que** le robot de préparation de commandes (R) avec l'objet (9) prélevé est déplacé jusqu'à un support de charge cible, le support de charge cible (12) est détecté au moyen d'un système de capteurs d'environnement, et les données de capteur du système de capteurs d'environnement sont évaluées dans le moyen de traitement de données (D), dans lequel une position de dépôt prévue pour l'objet (9) sur le support de charge cible (12) est vérifiée selon quatre degrés de liberté qui sont formés par la direction x horizontale, en particulier la direction longitudinale horizontale, la direction y horizontale, en particulier la direction transversale horizontale, la direction z verticale et la rotation ψ autour de la direction z, le manipulateur de charge (M) est approché de la position de dépôt en respectant des distances de sécurité dans la direction x, la direction y et la direction z, des espaces formés dans la direction x, la direction y et la direction ψ sont comblés au moyen de l'élément de compensation (20), et l'objet (9) est déposé par le fait de combler l'espace dans la direction z.

21. Procédé selon la revendication 19 ou 20, **caractérisé en ce que** l'élément de compensation (20) est arrêté lors du déplacement du robot de préparation de commandes (R), et n'est libéré que lors de l'approche du manipulateur de charge (M) de la position de prélèvement ou de dépôt.

22. Procédé selon la revendication 21, **caractérisé en ce que** l'arrêt de l'élément de compensation (20) est annulé en cas de surcharge externe.

23. Procédé selon l'une quelconque des revendications 19 à 22, **caractérisé en ce que** les mouvements relatifs de l'élément de compensation (20) sont détectés au moyen d'au moins un capteur, et les données de capteur du capteur sont évaluées dans le moyen de traitement de données (D), dans lequel le robot de préparation de commandes (R) est arrêté automatiquement lorsque des signaux de mouvement sont identifiés qui dépassent un bruit de fond prédéfini.
